# EUROPÄISCHE PATENTSCHRIFT

(11) **EP 0 464 536 B1**
(45) Veröffentlichungstag und Bekanntmachung des Hinweises auf die Patenterteilung: **26.02.1997**
(21) Anmeldenummer: 91110318.2
(22) Anmeldetag: 22.06.1991
(51) Int. Cl.: G11B 11/03, G11B 3/00

(54) **Verfahren zur Speicherung von Informationseinheiten im Nanometerbereich**
Method for storage of information units in nanometre range
Procédé à mémorisation d'unités d'information dans la gamme de nanomètre

(30) Priorität: 03.07.1990 DE 4021075
(43) Veröffentlichungstag der Anmeldung: 08.01.1992
(73) Patentinhaber: BASF Aktiengesellschaft, 67063 Ludwigshafen (DE)
(72) Erfinder: Rabe, Jürgen, Dr., W-6500 Mainz (DE); Buchholz, Stefan, W-6500 Mainz (DE); Fuchs, Harald, Dr., W-6719 Carlsberg (DE)

(56) Entgegenhaltungen:
- EP-A- 0 360 337
- WO-A-88/04470
- US-A- 4 829 507
- US-A- 4 916 688
- Physical Review B, Bd. 36, Nr.2, 15.Juli 87, Seiten 1284-1287,US -A- 4575822

## Beschreibung

Die Erfindung betrifft ein Verfahren zur Speicherung von Informationseinheiten im Nanometerbereich durch Formänderung einer Edelmetalloberfläche.

Die Speicherung von Informationen, insbesondere von Bild- und Datensignalen, erfolgt derzeit vorwiegend mit Hilfe magnetischer und optischer Aufzeichnungsträger. Die erzielbare Informationsdichte bei derartigen Aufzeichnungsträgern wird bestimmt durch die verfahrensbedingt kleinsten erzeugbaren und wieder auslesbaren Informationseinheiten. Diese sind bei den derzeit üblichen Magnetspeichern bestimmt durch die Größe der magnetischen Domänen (Weiß'sche Bezirke), in mechanischer Hinsicht durch den Kopfspalt der verwendeten Schreib/Leseköpfe sowie durch den Abstand der Schreib/Leseeinheit vom eigentlichen Informationsträger. Bei Informationsträgern, bei denen die eingespeicherte Information durch Änderung der optischen Eigenschaften erzeugt wird, liegt die Begrenzung in der verwendeten Lichtwellenlänge. Hier können somit die kleinsten Informationseinheiten nicht kleiner sein als etwa die halbe Lichtwellenlänge. Eine Steigerung der Speicherdichte bei derartigen optischen Aufzeichnungsträgern ist inzwischen auch durch die sogenannte optische Nahfeldmikroskopie erreichbar, wobei sich die optische Ausleseeinheit nur wenige Nanometer über der informationstragenden Oberfläche befindet. Erreicht werden hierbei Informationsdichten, die sich derzeit bestenfalls in der Größenordnung von etwa 20 nm befinden.

Eine weitere Steigerung der Informationsdichte ist nur möglich durch die Anwendung von Nahfeldtechniken mit einer Auflösung im Subnanometerbereich. Hierzu eignen sich die sogenannten Raster-Sonden-Techniken zu denen das Raster-Tunnel-Mikroskop bzw. das Kraft-Mikroskop gehören. Diese Methoden erlauben Abbildungen von Oberflächen auf atomarer Skala. Es wurde daher schon vorgeschlagen, Informationsspeicher mit der höchstmöglichen Dichte, nämlich im Bereich der einzelnen Atome bzw. Moleküle, zu erzeugen. Die Realisierung dieser Speicher würde zu Informationsdichten führen, welche im Terabyte-Bereich pro cm² liegen.

Zur Speicherung von Informationen im Nanometerbereich auf anorganischen oder organischen Oberflächen gibt es bereits eine Reihe von Vorschlägen, so u.a. M.A. McCord et al., J.Vac.Sci.Technol. B4, 86-88 (1986), R.M. Silver et al., Appl.Phys.Lett. 51, 247-249 (1987), U. Staufer et al., J.Vac.Sci.Technol. A6, 537-539 (1988). Auch über die Abscheidung einzelner Atome wurde schon berichtet (R.S. Becker et al., Nature 325, 415-421 (1987)).

in EP-A-0 360 337 wird die Modifizierung von Siliziumoberflächen mit Hilfe eines Tunnelmikroskops beschrieben. In Physical Review B, Bd. 36, Nr. 2, 15. Juli 1987, Seiten 1284-1287 wird, gemäß dem Oberbegriff des Anspruchs 1, die Herstellung von Vertiefungen durch "indentation" beschrieben, wobei die Rastersonde mechanisch in das Substrat gedrückt wird.

Alle bisher bekanntgewordenen Vorschläge, höchstauflösende InformationsSpeicher, welche insbesondere auch über lange Zeit stabil sind und sich innerhalb extrem kurzer Zeit erzeugen lassen, bereitzustellen, konnten jedoch nicht befriedigen.

Aufgabe der vorliegenden Erfindung war es daher, die genannten Nachteile zu beseitigen und ein Verfahren zur Speicherung von Informationseinheiten im Nanometerbereich bereitzustellen, mit dem eine zeitlich stabile und sehr schnelle Speicherung von Informationen möglich ist.

Es wurde nun gefunden, daß sich die Aufgabe mit einem Verfahren zur zeitlich stabilen Speicherung von Informationseinheiten im Nanometerbereich lösen läßt, bei dem in einer Edelmetalloberfläche näpfchenförmige Vertiefungen mit einem Durchmesser von 1 nm bis 1 µm und einer Tiefe von weniger als 1000 nm mittels einer oberflächensensitiven Rastersonde erzeugt werden, und die Verformung der leitenden Oberfläche mittels der oberflächensensitiven Rastersonde durch das Anlegen eines kurzzeitigen elektrischen Spannungspulses zwischen Sonde und Edelmetalloberfläche, vorzugsweise durch Felddesorption bewirkt wird.

In einer weiteren Ausgestaltung läßt sich die gemäß dem erfindungsgemäßen Verfahren vorgenommene Speicherung von Informationseinheiten durch thermische Behandlung wieder rückgängig machen, d.h. die Information löschen.

Bei der Durchführung des erfindungsgemäßen Verfahrens wird von einer Edelmetalloberfläche ausgegangen, beispielsweise die Oberfläche eines Edelmetalleinkristalls oder die Oberfläche einer durch Verdampfen von Gold, Platin, Palladium und insbesondere Silber auf einer festen unterlage, wie z.B. Glimmer, Silicium oder Glas, erzeugten Schicht in einer Dicke von 10 nm bis 10 µm, im besonderen von 50 nm bis 1 µm. In die Oberfläche einer solchen Silberschicht wird nun mit Hilfe der Nahfeldtechnik, z.B. mit einer nadelförmigen Elektrode einer oberflächensensitiven Rastersonde, etwa eines Raster-Tunnelmikroskops durch Anlagen eines kurzzeitigen elektrischen Feldes, d.h. eines Spannungspulses von kleiner 1 ms, insbesondere von 1 ps bis 1 µs Dauer und einer Spannung zwischen 1 und 6 Volt die atomare Markierung vorgenommen. Da der Ort des maximalen elektrischen Feldes einer solchen Rastersonde auf der leitenden Oberfläche vorzugsweise zwischen 100 nm und 1 nm beträgt, läßt sich auf diese Weise nur in dem beeinflußten Bereich der Oberfläche das Metall durch einen momentanen übertrag auf die Sondenspitze entfernen. Dadurch entstehen die näpfchenförmigen Vertiefungen, welche als eine zeitlich stabile Markierung zur Informationsspeicherung herangezogen werden kann. Wesentlich ist außerdem, daß sich die Maßnahme unter normalen Umgebungsbedingungen, d.h. beispielsweise an Luft und bei Raumtemperatur, durchführen läßt.

Für die zum Einschreiben der Informationen verwendete Nahfeldtechnik lassen sich die bekannten Verfahren der Raster-Tunnel-Mikroskopie bzw. der Kraft-Mikroskopie einsetzen. Die Anordnung dieser Nahfeldtechniken ist zur Charakterisierung von Oberflächen bekannt und auch beschrieben (Y. Kuk et al., Rev., Sci. Instrum. 60 (2), 165-180 (1989).

Das erfindungsgemäße Verfahren sei im folgenden beispielhaft erläutert:

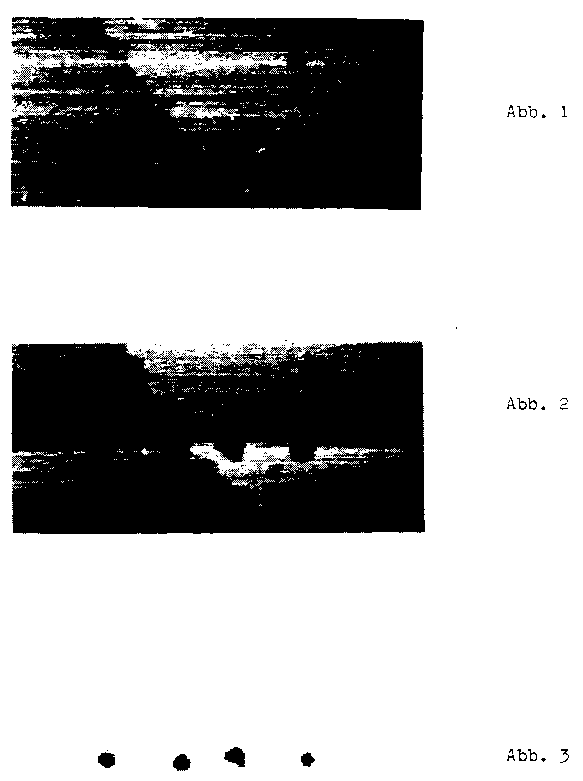

Glatte Terrassen einer epitaxial auf Glimmer aufgedampften 100 nm dicken Silberschicht wurden mit einem Raster-Tunnelmikroskop abgebildet. Abb. 1 (140 x 63 nm) zeigt zwei Terrassen dieser Schicht mit einer Rauhigkeit von 1 nm und einer Stufenhöhe von 1 nm. Auf defektfreie Stellen der Schicht wurden Spannungspulse von 5 Volt für eine Dauer von 10 ns appliziert. Eine rasche Stromzunahme und Zurückziehen der Meßnadel durch den Regelkreis zeigten an, daß kurzzeitig ein Metall-Metall-Punktkontakt entstanden war, der beim Zurückziehen der Nadel zum Herauslösen eines Silberclusters mit einem Durchmesser von 10 nm und einer Tiefe von 5 nm geführt hat (Abb. 2). Die Abb. 3 zeigt eine Kontrastverstärkung von Abb. 2. Die Stabilität der so erzeugten Vertiefung in der Silberoberfläche erlaubt die Betrachtung des Effektes über mehr als einen Tag.

## Patentansprüche

1. Verfahren zur zeitlich stabilen Speicherung von Informationseinheiten im Nanometerbereich, bei der in einer Edelmetalloberfläche näpfchenförmige Vertiefungen mit einem Durchmesser von 1 nm bis 1 µm und einer Tiefe von weniger als 1000 nm mittels einer oberflächensensitiven Rastersonde erzeugt werden, dadurch gekennzeichnet, daß die Verformung der Oberfläche mittels der oberflächensensitiven Rastersonde durch Anlegen eines kurzzeitigen elektrischen Spannungspulses zwischen Sonde und Edelmetalloberfläche bewirkt wird.

2. Verfahren gemäß Anspruch 1, dadurch gekennzeichnet, daß die Verformung der Oberfläche durch Felddesorption ausgelöst wird.

3. Verfahren gemäß Anspruch 1, dadurch gekennzeichnet, daß die Edelmetalloberfläche eine Silberschicht ist.

4. Verfahren zum Löschen von Informationseinheiten im Nanometerbereich, welche durch Erzeugen von näpfchenförmigen Vertiefungen in einer Edelmetalloberfläche erhalten wurden, dadurch gekennzeichnet, daß näpfchenförmige Vertiefungen, die nach dem Verfahren gemäß Anspruch 1 mittels einer oberflächensensitiven Rastersonde erzeugt wurden, durch thermische Behandlung rückgängig gemacht werden,

## Claims

1. A process for the time-stable storage of information units in the nanometer range, in which cup-like pits having a diameter of from 1 nm to 1 µm and a depth of less than 1000 nm are produced in a noble-metal surface by means of a surface-sensitive scanning probe, wherein the deformation of the surface is effected by means of the surface-sensitive scanning probe by applying a short-duration electrical voltage pulse between the probe and the noble-metal surface.

2. A process as claimed in claim 1, wherein the deformation of the surface is initiated by field desorption.

3. A process as claimed in claim 1, wherein the noble-metal surface is a silver coating.

4. A process for erasing information units in the nanometer range which have been obtained by producing cup-like pits in a noble-metal surface, wherein the cup-like pits produced by the process as claimed in claim 1 by means of a surface-sensitive scanning probe are leveled by thermal treatment.

## Revendications

1. Procédé de mémorisation stable dans le temps d'unités d'information dans le domaine nanométrique, dans lequel on produit des creux en forme de petits godets de 1 nm à 1 µm de diamètre et moins de 1000 nm de profondeur dans une surface de métal précieux au moyen d'une sonde à balayage à surface sensible, caractérisé par le fait qu'on produit la déformation de la surface au moyen de la sonde à balayage à surface sensible en appliquant une brève impulsion de tension électrique entre la sonde et la surface de métal précieux.

2. Procédé selon la revendication 1, caractérisé par le fait qu'on déclenche la déformation de la surface par désorption de champ.

3. Procédé selon la revendication 1, caractérisé par le fait que la surface de métal précieux est une couche d'argent.

4. Procédé d'effacement d'unités d'information dans le domaine nanométrique qui ont été obtenues par production de creux en forme de petits godets dans une surface de métal précieux, caractérisé par le fait qu'on annule par traitement thermique les creux en forme de petits godets qui ont été produits par le procédé de la revendication 1 au moyen d'une sonde à balayage à surface sensible.
